# DEMANDE DE BREVET EUROPEEN

(11) **EP 4 844 524 A1**
(43) Date de publication de la demande: **25.11.2026**
(21) Numéro de dépôt: 26178414.4
(22) Date de dépôt: 13.05.2026
(51) Int. Cl.: G05D 23/19, F24D 19/10, G05B 11/42, G05B 13/02

(54) **PROCEDE DE REGULATION PID D'UNE PIECE D'UN BATIMENT CHAUFFEE PAR UN FLUIDE CALOPORTEUR CIRCULANT DANS UNE INSTALLATION DE CHAUFFAGE, DISPOSITIF DE REGULATION ET PROGRAMME D'ORDINATEUR**

(30) Priorité: 22.05.2025 FR 2505524
(71) Demandeur: Delta Dore, 35270 Bonnemain (FR)
(72) Inventeur: LEGUILLON, Maxime, 35270 BONNEMAIN (FR); THIROUARD, Benoist, 35270 BONNEMAIN (FR)
(74) Mandataire: Cabinet Le Guen Maillet

(57) **Abrégé**

Il est proposé ici, un procédé de régulation PID de la température d'une pièce d'un bâtiment. Le procédé utilise une table de correspondance comprenant une pluralité de consignes chacune étant possiblement associée à une valeur d'une variable d'intégration de la régulation PID. Le procédé comprend : sur réception (E101) d'une consigne, obtenir (E102) une valeur d'une variable d'intégration associée à ladite consigne à partir de la table de correspondance ou attribuer une valeur prédéterminée par défaut, initier (E104) ladite régulation PID en affectant à la variable d'intégration associée à la consigne soit la valeur obtenue, soit la valeur prédéterminée par défaut, pendant une période prédéterminée ou jusqu'à ce qu'une condition de température soit remplie, puis, poursuivre (E105) la régulation PID en ajustant la valeur de la variable d'intégration associée à la consigne, la valeur obtenue ou la valeur prédéterminée par défaut étant utilisée comme valeur initiale.

## Description

### DOMAINE TECHNIQUE

La présente divulgation concerne le domaine des installations de chauffage à fluide caloporteur. Elle concerne plus particulièrement les installations de chauffage utilisant une vanne thermostatique comprenant une tête thermostatique électronique, connectée ou non, pour la régulation de la température d'une pièce (ou zone intérieure) d'un bâtiment.

### ETAT DE LA TECHNIQUE ANTERIEURE

Une vanne thermostatique (ci-après « vanne ») est une vanne qui permet de contrôler le débit d'un fluide caloporteur dans un radiateur. Classiquement les vannes thermostatiques comportent une sonde thermosensible, qui se dilate et se contracte en fonction de la température ambiante et qui actionne un système mécanique, lequel laisse passer une quantité appropriée de fluide caloporteur dans le radiateur. En général, une vanne thermostatique est constituée d'un corps de vanne et d'une tête thermostatique.

Le corps de vanne est un composant de la vanne utilisé pour contrôler la direction, la pression et le débit du fluide caloporteur dans le radiateur. Le corps de vanne constitue la partie principale de la vanne et abrite les mécanismes internes qui permettent l'ouverture, la fermeture ou la modulation du passage du fluide caloporteur dans le radiateur.

La tête thermostatique permet de régler une température souhaitée dans une pièce (ou zone intérieure) d'un bâtiment en déplaçant un élément mobile compris dans le corps de vanne qui module la quantité de fluide circulant dans le radiateur.

Il existe trois types de têtes thermostatiques, les têtes thermostatiques mécaniques, les têtes thermostatiques électroniques et les têtes thermostatiques connectées.

Les têtes thermostatiques mécaniques sont les têtes thermostatiques les plus classiques, avec une graduation visible allant de 1 à 5 et d'un mode hors gel, elles ne sont pas programmables. Elles sont réglables manuellement, uniquement.

Les têtes thermostatiques électroniques se contrôlent facilement, et ont les mêmes avantages que les mécaniques, mais bénéficient d'un affichage et d'un contrôle digital au demi-degré près. Les têtes thermostatiques électroniques sont programmables, qu'il s'agisse de programmes horaires ou hebdomadaires. Elles se contrôlent directement sur la vanne ou *via* un thermostat d'ambiance.

Les têtes thermostatiques connectées sont une évolution des têtes thermostatiques électroniques, offrant une connectivité Internet qui permet une gestion à distance et une intégration avec des systèmes de domotique et/ou des thermostats connectés. Elles permettent une programmation avancée *via* des applications mobiles ou des interfaces web, un contrôle précis de la température, et une collecte de données pour optimiser la consommation énergétique.

En général, les têtes thermostatiques électroniques, connectées ou non, sont configurées pour mettre en œuvre des algorithmes de régulation de la température, tel qu'un algorithme de régulation de type PID (Proportionnelle - Intégrale - Dérivée). Ainsi, par la suite, le terme « régulation PID » ou « régulation thermique » fait référence à l'ensemble des calculs et décisions permettant d'assurer une stabilité thermique d'une pièce (ou zone intérieure) d'un bâtiment tout en minimisant les oscillations et la consommation énergétique. La régulation PID mise en œuvre par la tête thermostatique électronique, connectée ou non, de la vanne permet de moduler l'ouverture du corps de vanne et d'ajuster le débit du fluide caloporteur circulant dans le radiateur. L'objectif de la régulation PID est donc de maintenir la température ambiante au plus proche de la consigne fixée par l'utilisateur, en tenant compte des variations thermiques de l'environnement.

Pour cela, la régulation PID doit tenir compte de plusieurs contraintes, notamment la fréquence et la durée de commande du moteur qui ajuste l'ouverture et la fermeture du corps de vanne en réponse aux instructions de la tête thermostatique, afin de préserver la durée de vie des batteries. Elle doit également considérer la loi d'eau, ainsi que les variations de température extérieure, les apports d'énergie externes et doit pouvoir s'adapter aux différents types de radiateurs et de corps de vanne. Enfin, pour garantir un bon équilibre entre performance et consommation énergétique, elle doit respecter certaines normes telle que la norme eu.bac (« *European Building Automation and Controls Association* » en anglais), qui évalue l'efficacité et la précision des systèmes de régulation thermique.

Cependant, il existe sur le marché de nombreux corps de vannes aux caractéristiques techniques largement différentes. En effet, le point d'ouverture et la linéarité d'un corps de vanne varie selon les marques et les modèles. Ainsi, pour une même consigne de température et une même action du moteur de la tête thermostatique, les débits obtenus peuvent être très différents, ce qui peut entraîner des instabilités dans la régulation. Ainsi, malgré les avancées technologiques, la performance des vannes thermostatiques reste donc fortement influencée par les caractéristiques du corps de vanne, rendant l'optimisation de la régulation PID particulièrement complexe. En particulier, la régulation thermique actuelle ne parvient pas à s'adapter de manière optimale à tous les types de corps de vannes, tout en respectant les contraintes précitées. Les écarts de débit générés pour une même consigne de température peuvent provoquer des instabilités et une surconsommation d'énergie, avec des oscillations de température pouvant atteindre 2 à 3 °C.

Il est donc souhaitable de pallier ces inconvénients de l'état de la technique.

En particulier, il est souhaitable de fournir une solution qui permette à la régulation thermique, notamment de type PID, de s'ajuster précisément aux caractéristiques de chaque corps de vanne, ainsi qu'aux variations des conditions environnementales. En outre, il est souhaitable de fournir une solution permettant de garantir une meilleure stabilité de la température, un confort accru, une consommation énergétique réduite et une durée de vie prolongée des batteries des moteurs compris dans la tête thermostatique de la vanne.

### EXPOSE DE L'INVENTION

Il est proposé ici, un procédé de régulation proportionnelle, intégrale, dérivée, dite régulation PID, de la température d'une pièce d'un bâtiment, ladite pièce étant chauffée au moyen d'un fluide caloporteur circulant dans une installation de chauffage comprenant une vanne thermostatique comportant une tête thermostatique. Le procédé est implémenté dans un dispositif de régulation de la tête thermostatique. Le procédé utilise une table de correspondance comprenant une pluralité de consignes de température chacune étant possiblement associée à une valeur d'une variable d'intégration de la régulation PID. Le procédé comprend :
- sur réception d'une consigne de température à atteindre et maintenir, obtenir une valeur d'une variable d'intégration associée à ladite consigne à partir de la table de correspondance ou,, à défaut, attribuer une valeur prédéterminée par défaut à ladite variable d'intégration associée à ladite consigne,
- initier ladite régulation PID en affectant à la variable d'intégration associée à la consigne soit la valeur obtenue à partir de la table de correspondance, soit la valeur prédéterminée par défaut, et en maintenant ladite valeur de variable d'intégration constante pendant une période prédéterminée ou jusqu'à ce qu'une condition de température soit remplie, puis,
- poursuivre la régulation PID en ajustant la valeur de la variable d'intégration associée à la consigne, la valeur obtenue ou la valeur prédéterminée par défaut attribuée étant utilisée comme valeur initiale pour la variable d'intégration de la consigne.

Avantageusement, ce procédé assure une régulation de type PID de température stable, avec des oscillations inférieures à 1°C, indépendamment du type de corps de vanne et des conditions environnementales, tout en permettant de limiter les dépassements de température à moins de 1°C lors des changements de consigne. En effet, en bloquant la variable d'intégration (%I) à une valeur prédéterminée pendant une partie de la régulation thermique, il est possible d'éviter des oscillations ou des surcompensations.

Selon un mode de réalisation, le procédé comprend en outre : mettre à jour ladite table de correspondance avec une valeur d'une variable d'intégration de la régulation PID associée à une consigne antérieure.

Avantageusement, la mise à jour de la valeur de la variable d'intégration pour une consigne donnée à chaque changement de consigne permet d'appliquer une valeur adaptée non seulement au type de corps de vanne, mais aussi aux conditions environnementales qui varient en fonction des saisons. En ajustant cette valeur, le procédé améliore la précision et l'efficacité de la régulation thermique, garantissant ainsi une performance optimale dans des conditions changeantes.

Selon un mode de réalisation, mettre à jour ladite table de correspondance avec ladite valeur de variable d'intégration associée à la consigne antérieure comprend : déterminer ladite valeur de variable d'intégration associée à la consigne antérieure à partir d'une moyenne glissante sur une période prédéterminée de ladite régulation PID si la vanne thermostatique est en fonctionnement depuis une période prédéterminée de fonctionnement suivant une installation de la tête thermostatique, et la vanne thermostatique est en mode ouvert, et un temps écoulé depuis que la vanne thermostatique est en mode ouvert est supérieur à une période prédéterminée d'ouverture de la vanne, et la variable d'intégration associée à la consigne antérieure est ajustée pendant la régulation PID, et une moyenne de la température ambiante est comprise dans un intervalle de température prédéterminé autour de la consigne antérieure.

Selon un mode de réalisation, obtenir la valeur de la variable d'intégration associé à la consigne à partir de ladite table de correspondance comprend :
- vérifier s'il existe une valeur de la variable d'intégration associée à la consigne qui a été préalablement enregistrée dans la table de correspondance au cours d'un changement de consigne postérieur vers cette même consigne, et si cette valeur est à jour, et ;
- si aucune valeur de la variable d'intégration n'est associée à la consigne dans ladite table de correspondance ou si cette valeur est obsolète, déterminer ladite valeur à partir d'une valeur, à jour, de variable d'intégration associée à une consigne supérieure dont une température est supérieure à une température de la consigne et une valeur, à jour, de variable d'intégration associée à une consigne inférieure dont une température est inférieure à la température de la consigne, et enregistrer ladite valeur déterminée dans la table de correspondance en association avec la consigne ;
- sinon, déterminer ladite valeur associée à la consigne à partir uniquement d'une valeur, à jour, de variable d'intégration associée à une consigne supérieure dont une température est supérieure à la température de la consigne, et enregistrer ladite valeur déterminée dans la table de correspondance en association avec la consigne ;
- sinon, déterminer ladite valeur associée à la consigne à partir uniquement d'une valeur, à jour, de variable d'intégration associée à une consigne inférieure dont une température est inférieure à la température de la consigne, et enregistrer dans la table de correspondance ladite valeur déterminée en association avec la consigne ;
- sinon, attribuer ladite valeur prédéterminée par défaut à la variable d'intégration associée à la consigne.

Selon un mode de réalisation, le procédé comprend en outre :
- déterminer si une différence entre la température de la consigne et la température ambiante est supérieure ou égale à une température seuil prédéterminée ou si une différence entre la température de la consigne et la température ambiante est inférieure à ladite température seuil prédéterminée et qu'en outre la vanne thermostatique est en mode fermé ;
- sinon, déterminer si une différence entre la température ambiante et la température de la consigne est supérieure à ladite température seuil prédéterminée ;
- sinon, déterminer si une différence entre la température ambiante et la température de la consigne est inférieure ou égale à ladite température seuil prédéterminée et qu'en outre la vanne thermostatique est en mode fermé.

Selon un mode de réalisation, ladite une condition de température à remplir est que la température ambiante atteigne la température de la consigne au cours de la régulation PID, lorsque la différence entre la température de la consigne et la température ambiante est supérieure ou égale à ladite température seuil prédéterminée ou lorsque la différence entre la température de la consigne et la température ambiante est inférieure à ladite température seuil prédéterminée et qu'en outre la vanne thermostatique est en mode fermé.

Selon un mode de réalisation, ladite une condition de température à remplir est que la température ambiante soit inférieure à la température de la consigne additionnée d'un seuil prédéterminé de température lorsque la différence entre la température ambiante et la température de la consigne est supérieure à ladite température seuil prédéterminée ou lorsque la différence entre la température ambiante et la température de la consigne est inférieure ou égale à ladite température seuil prédéterminée et qu'en outre la vanne thermostatique est en mode fermé.

Selon un mode de réalisation, la table de correspondance comprend en outre une pluralité de plages de températures extérieures chacune associée à ladite pluralité de consignes de température chacune étant possiblement associée à une valeur d'une variable d'intégration (%I) de la régulation PID.

Il est également proposé ici un dispositif de régulation proportionnelle, intégrale, dérivée, dite régulation PID, de la température d'une pièce d'un bâtiment, ladite pièce étant chauffée au moyen d'un fluide caloporteur circulant dans une installation de chauffage comprenant une vanne thermostatique comportant une tête thermostatique. Le dispositif de régulation est compris dans la tête thermostatique. Le dispositif de régulation comprend de la circuiterie électronique configurée pour utiliser une table de correspondance comprenant une pluralité de consignes de température chacune étant possiblement associée à une valeur d'une variable d'intégration de la régulation PID. La circuiterie électronique est en outre configurée pour :
- sur réception d'une consigne de température à atteindre et maintenir, obtenir une valeur d'une variable d'intégration associée à ladite consigne à partir de la table de correspondance ou, à défaut, attribuer une valeur prédéterminée par défaut à ladite variable d'intégration associée à ladite consigne,
- initier ladite régulation PID en affectant à la variable d'intégration associée à la consigne soit la valeur obtenue à partir de la table de correspondance, soit la valeur prédéterminée par défaut, et en maintenant ladite valeur de variable d'intégration constante pendant une période prédéterminée ou jusqu'à ce qu'une condition de température soit remplie, puis,
- poursuivre la régulation PID en ajustant la valeur de la variable d'intégration associée à la consigne, la valeur obtenue ou la valeur prédéterminée par défaut attribuée étant utilisée comme valeur initiale pour la variable d'intégration de la consigne.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont lues et exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement des étapes du procédé de régulation PID de la température d'une pièce d'un bâtiment chauffée au moyen d'un fluide caloporteur circulant dans une installation de chauffage, selon un mode de réalisation ;
[Fig. 2A] illustre schématiquement les sous-étapes d'une étape de mise à jour d'une valeur d'une variable d'intégration associée à une consigne initiale du procédé de régulation thermique, selon un mode de réalisation ;
**[****Fig.** 2B] illustre schématiquement les sous-étapes d'une étape d'obtention et de mise à jour d'une valeur d'une variable d'intégration associée à une nouvelle consigne du procédé de régulation thermique, selon un mode de réalisation ;
[Fig. 3] illustre schématiquement les sous-étapes d'une étape d'initialisation des paramètres de configuration de la régulation du procédé de régulation thermique, selon un mode de réalisation ;
[Fig. 4] illustre schématiquement les sous-étapes d'une étape d'initialisation de la régulation thermique du procédé de régulation thermique, selon un mode de réalisation ;
[Fig. 5] illustre schématiquement les sous-étapes d'une étape d'initialisation de la régulation thermique du procédé de régulation thermique, selon un autre mode de réalisation ;
[Fig. 6] illustre schématiquement un exemple de plateforme matérielle permettant d'implémenter, sous forme de circuiterie électronique, le dispositif de régulation selon un mode de réalisation.

### EXPOSE DETAILLE DE MODES DE REALISATION

Comme décrit précédemment, une régulation de type PID (Proportionnel-Intégral-Dérivé) est une méthode de contrôle qui ajuste un système (e.g., installation de chauffage) en fonction de l'erreur entre une consigne (e.g., température requise par un utilisateur) et la valeur mesurée (e.g., température ambiante mesurée d'une pièce (u zone intérieure) d'un bâtiment).

La composante « Intégrale » (%I), ou terme « Intégral » (ci-après « variable d'intégration %I »), est l'une des variables de la régulation thermique PID avec les composantes « Proportionnelle » (%P) et « Dérivée » (%D). Cette variable d'intégration %I permet d'accumuler les écarts entre la température ambiante mesurée et la consigne au fil du temps, afin de corriger des erreurs persistantes. En ajustant cette variable d'intégration %I, il est possible d'éliminer les dérives et maintenir une température stable et précise, même face à des perturbations environnementales. Ainsi, au cours de la phase stabilisée de la régulation thermique, lorsque l'erreur est nulle, les composantes Proportionnelle (%P) et Dérivée (%D) deviennent nulles, laissant la composante Intégrale (%I) déterminer la valeur finale de la commande pour compenser les déperditions thermiques à une température de consigne donnée.

Ainsi, le principe général de la présente divulgation consiste en l'adaptation de la régulation thermique mise en œuvre par la tête thermostatique d'une vanne d'une installation de chauffage (e.g., radiateur) à tous les types de corps de vanne et aux conditions environnementales. Plus particulièrement, cette adaptation de la régulation thermique repose sur l'apprentissage permanent et, le cas échéant la réinitialisation, de la composante Intégrale ou variable d'intégration %I de la régulation pour chaque consigne demandée (i.e., consigne pour laquelle la régulation permet d'atteindre et stabiliser une température visée). En d'autres termes, pour chaque consigne demandée, la valeur de la variable d'intégration %I de la régulation est apprise au cours d'une phase stabilisée de la régulation, lorsque la température atteint celle de la consigne demandée.

Le cas échéant, la valeur de la variable d'intégration %I est également apprise en fonction non seulement de la température de consigne, mais aussi d'autres paramètres contextuels, tels que la température extérieure (i.e., température de l'air ambiant mesurée en dehors d'un espace clos (bâtiment, enceinte, véhicule, etc.), représentative des conditions environnementales extérieures, par opposition à la température intérieure mesurée à l'intérieur de cet espace).

Cet apprentissage permanent de la variable d'intégration %I est donc un processus continu au cours duquel il est possible d'ajuster et d'affiner la valeur de la variable d'intégration %I en fonction des données collectées en temps réel. Il est ainsi possible d'adapter constamment la régulation thermique aux variations des conditions environnementales, ainsi qu'au corps de vanne, et d'améliorer progressivement sa précision et son efficacité.

En particulier, lors d'un changement de consigne (i.e., changement de température visée par la régulation), s'il existe une valeur « apprise » pour la variable d'intégration %I associée à la nouvelle consigne demandée, alors cette valeur de la variable d'intégration %I est appliquée pendant une partie de la régulation pour améliorer la dynamique de l'installation de chauffage. Puis, sous certaines conditions, l'application forcée de cette valeur de la variable d'intégration %I est arrêtée pour poursuivre la régulation thermique PID avec la valeur « apprise » comme valeur de départ de la variable d'intégration %I.

Par la suite, le terme « consigne » désigne une valeur de température (en °C) de référence définie, par exemple, par l'utilisateur et qui indique à la vanne thermostatique le niveau de température souhaité ou le mode de fonctionnement (mode « économique » ou mode « confort ») à atteindre et à maintenir. Une consigne peut donc se rapporter à une température spécifique, par exemple 21°C, que la vanne thermostatique doit viser pour assurer le confort de l'utilisateur. Elle peut également correspondre à un mode de fonctionnement, tel que « confort » ou « économique », chacun étant associé à des paramètres de température et/ou des horaires prédéfinis.

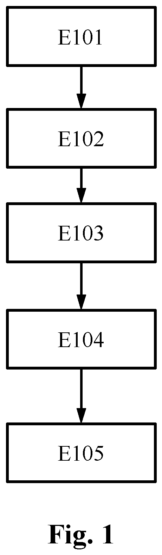

La Fig. 1 illustre schématiquement des étapes du procédé de régulation de la température d'une pièce d'un bâtiment chauffée au moyen d'un fluide caloporteur circulant dans une installation de chauffage, selon un mode de réalisation.

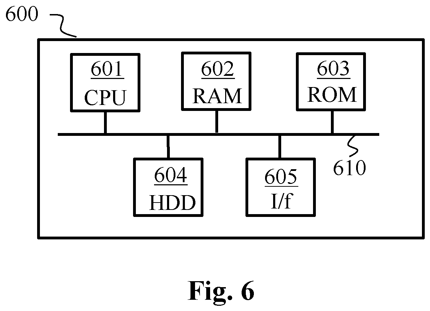

Tout ou partie des étapes du procédé de régulation sont mises en œuvre (i.e., implémentées) dans un dispositif de régulation 600 décrit ci-après en lien avec la Fig. 6. Le dispositif de régulation 600 est incorporé dans une tête thermostatique d'une vanne thermostatique de l'installation de chauffage (e.g., radiateur).

Au cours d'une étape E101, une demande de changement de consigne est réceptionnée par le dispositif de régulation 600. Cette « demande de changement de consigne » correspond donc à un signal ou une commande envoyée au dispositif de régulation 600 par un système de contrôle de la température (e.g., thermostat connecté, système de domotique, ou système de réglage de la température intégré à la vanne thermostatique...) pour modifier la consigne initiale, ou en cours, et donc la température visée ou le mode de fonctionnement de la vanne thermostatique. Cette commande peut être initiée par un utilisateur *via* une interface dédiée du système de contrôle de la température ou automatiquement, par exemple, selon un programme préétabli, comme un planning horaire ou des conditions environnementales particulières. Elle spécifie les nouveaux paramètres souhaités, tels qu'une température plus élevée ou plus basse ou un changement de mode (par exemple, passer de « économique » à « confort »), afin d'adapter le fonctionnement de la vanne thermostatique aux besoins actuels de confort ou d'efficacité énergétique.

Selon un mode de réalisation, cette demande de changement de consigne comprend donc une information concernant une nouvelle consigne (i.e., nouvelle température à atteindre ou mode de fonctionnement à mettre en œuvre) à viser par la régulation thermique. Par exemple, cette information correspond à une nouvelle température à atteindre et maintenir ou un mode de fonctionnement à respecter.

Sur réception de cette demande de changement de consigne, au cours d'une étape E102, le dispositif de régulation 600 met à jour une table de correspondance associant chaque consigne à une valeur de variable d'intégration (%I), notée Ivalue.

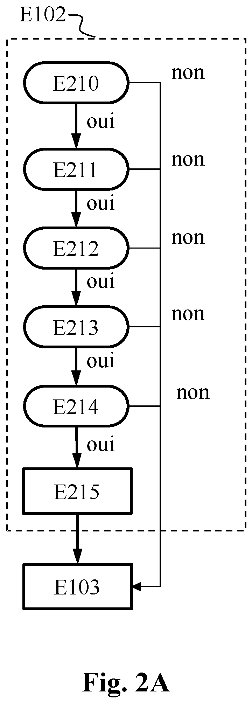

En particulier, selon un mode de réalisation particulier, le dispositif de régulation 600 met à jour, pour la consigne initiale, une valeur de la variable d'intégration (%I) qui lui est associée. Pour cela, le dispositif de régulation 600 exécute les sous-étapes E210 à E215 décrites ci-après en lien avec la Fig. 2A

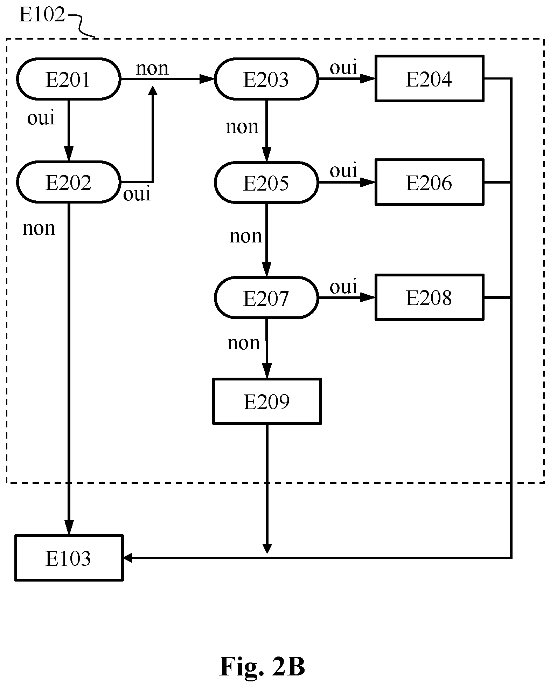

Selon un autre mode de réalisation particulier, le dispositif de régulation 600 met à jour, pour la nouvelle consigne, une valeur de la variable d'intégration (%I) qui lui est associée. Pour cela, le dispositif de régulation 600 exécute les sous-étapes E201 à E209 décrites ci-après en lien avec la Fig. 2B.

Une « consigne antérieure » ou « consigne initiale » correspond à la température visée avant qu'une demande de changement de consigne ne soit réceptionnée. Autrement dit, il s'agit de la température que le dispositif de régulation 600 maintient stable jusqu'à ce qu'une nouvelle instruction soit donnée, que ce soit par une action manuelle de l'utilisateur ou par un programme préétabli.

Il est à noter que le terme « consigne courante », ou « nouvelle consigne », désigne la température cible ou le mode de fonctionnement souhaité qui est spécifié dans la demande de changement de consigne. C'est la valeur ou le paramètre de température à atteindre et maintenir après que le dispositif de régulation 600 ait traité la demande de changement de consigne.

La Fig. 2A illustre schématiquement les sous-étapes de l'étape de mise à jour (E102) d'une valeur de la variable d'intégration (%I) associée à une consigne initiale du procédé de régulation, selon un mode de réalisation.

Selon ce mode de réalisation, sur réception de la demande de changement de consigne, le dispositif de régulation 600 met à jour une valeur de la variable d'intégration %I pour la consigne initiale. Pour cela, le dispositif de régulation 600, vérifie au cours des sous-étapes E210 à E214 si toutes les conditions suivantes sont respectées :
- sous-étape E210 : le dispositif de régulation 600 vérifie si la vanne est en fonctionnement depuis une période prédéterminée de fonctionnement (e.g., une heure) suivant l'installation de la tête thermostatique. En effet, dès que la tête thermostatique est en place, un décompte de temps s'active, permettant d'estimer la durée de fonctionnement de la vanne, que celle-ci soit en mode ouvert (i.e., vanne en régulation avec débit de fluide non nul) ou fermé (i.e., vanne ne régulant pas, débit de fluide nul) ;
- sous-étape E211 : le dispositif de régulation 600 vérifie que la vanne est en mode ouvert (i.e., en régulation, débit de fluide non nul), c'est-à-dire que le dispositif de régulation 600 a défini un paramètre d'état de la vanne noté s_v à 1 (s_v = 1) ;
- sous-étape E212 : le dispositif de régulation 600 vérifie que le temps écoulé depuis que la vanne est en mode ouvert (s_v = 1) est supérieur à une période prédéterminée d'ouverture de la vanne (e.g., une heure) ;
- sous-étape E213 : le dispositif de régulation 600 vérifie si la variable d'intégration %I est autorisée à être débloquée en montée (i.e., pour une augmentation de la température). En d'autres termes, le dispositif de régulation 600 a préalablement défini un paramètre de déblocage de la valeur de la variable d'intégration %I en montée à 1 (dblc_I_m_auto = 1) ;
- sous-étape E214 : le dispositif de régulation 600 vérifie si la température ambiante, mesurée sur une période donnée au cours de la phase stabilisée de la régulation thermique, répond à des critères prédéterminés de stabilité et/ou d'écart par rapport à la consigne. En effet, si ces critères prédéterminés de stabilité et/ou d'écart par rapport à la consigne ne sont pas remplis, la régulation thermique n'est pas suffisamment efficace pour garantir une valeur de variable d'intégration %I cohérente. Par exemple, la moyenne de la température ambiante mesurée dans la pièce ou zone intérieure du bâtiment sur cette période donnée se situe dans un intervalle de température prédéterminé (e.g., [consigne initiale - 1°C ; consigne initiale + 1°C]) autour de la consigne initiale et/ou la température ambiante mesurée à une variance inférieure à un seuil prédéterminé de variance.

Si toutes ces conditions sont remplies, le dispositif de régulation 600 calcule (sous-étape E215) une moyenne glissante de la valeur de la variable d'intégration %I sur une période prédéterminée et l'enregistre dans la table de correspondance en association avec la consigne initiale. L'horodatage de cette variable d'intégration %I est également enregistré, permettant de suivre le moment auquel la variable d'intégration %I a été calculée et enregistrée. Cette valeur de variable d'intégration %I horodatée et enregistrée dans la table de correspondance est ensuite appliquée à la régulation lors d'un prochain changement de consigne, si la nouvelle consigne demandée est identique à la consigne initiale et que certaines conditions particulières, détaillées ci-après, sont respectées. Au contraire, si l'une ou l'autres de ces conditions ne sont pas remplies, aucune mise à jour de la valeur de la variable d'intégration %I pour la consigne initiale n'est effectuée.

En d'autres termes, le dispositif de régulation 600 mémorise une valeur de la variable d'intégration %I de la régulation thermique pour la consigne initiale préalablement au changement de consigne. Si, lors d'un changement de consigne ultérieur, la nouvelle consigne correspond exactement à cette consigne initiale, et sous réserve que certaines conditions spécifiques soient réunies, le dispositif de régulation 600 peut réutiliser la valeur de variable d'intégration %I associée à la consigne initiale dans la table de correspondance afin d'optimiser le comportement de la régulation.

Selon un autre mode de réalisation, au cours de l'étape E102, le dispositif de régulation 600 obtient, en outre, à partir de la table de correspondance, une valeur de la variable d'intégration I% pour la nouvelle consigne à atteindre et maintenir et, le cas échéant, la met à jour.

La Fig. 2B illustre schématiquement les sous-étapes de l'étape d'obtention et de mise à jour (E102) d'une valeur de la variable d'intégration %I associée à une nouvelle consigne du procédé de régulation, selon un mode de réalisation.

Lors d'une sous-étape E201, le dispositif de régulation 600 effectue une recherche dans la table de correspondance qui est enregistrée dans une mémoire du dispositif de régulation 600. Cette table de correspondance associe chaque consigne, telle qu'une température (en °C), à une valeur de la variable d'intégration %I. Cette recherche vise à déterminer s'il existe une valeur de la variable d'intégration %I préalablement associée à la nouvelle consigne demandée et enregistrée dans la table.

Lorsqu'une valeur de variable d'intégration %I est enregistrée dans la table en association avec la nouvelle consigne (réponse « oui » à l'issue de la sous-étape E201), le dispositif de régulation 600 vérifie, au cours d'une sous-étape E202, si cette valeur est obsolète. Pour cela, le dispositif de régulation 600 récupère dans la table de correspondance un horodatage associé à la valeur de la variable d'intégration %I afin de s'assurer de la validité de celle-ci.

En effet, chaque valeur de variable d'intégration %I est horodatée, notamment pour faciliter la gestion et la mise à jour des données de la table de correspondance en fonction des changements dans les conditions environnementales ou des besoins de régulation. Dans le contexte d'une régulation thermique de type PID, une valeur de la variable d'intégration %I peut être considérée comme obsolète lorsqu'elle n'est plus pertinente ou précise pour la consigne demandée. Cela peut se produire, par exemple, si les conditions environnementales, les paramètres de la vanne thermostatique, ou les besoins de régulation ont changé de manière significative depuis que la valeur a été enregistrée. Une valeur de variable d'intégration %I obsolète peut entraîner une régulation inefficace ou imprécise. Chaque variable d'intégration %I de la table de correspondance est donc enregistrée avec un instant d'enregistrement associé, tel que la date et l'heure de l'enregistrement dans la table de correspondance, ou le temps écoulé depuis la mise en fonctionnement de la tête thermostatique de la vanne, exprimé en secondes.

Selon un mode de réalisation, le dispositif de régulation 600 compare l'horodatage associé à la valeur de la variable d'intégration %I associée à la nouvelle consigne avec un horodatage actuel, c'est-à-dire au moment de la réception de la demande de changement de consigne. Si la différence entre ces deux horodatages dépasse un seuil prédéterminé d'obsolescence (e.g., 14 jours, plusieurs mois...), la valeur de la variable d'intégration %I est alors considérée comme obsolète.

Lorsque la valeur de la variable d'intégration %I est à jour (réponse « non » à l'issue de la sous-étape E202), c'est cette valeur qui est appliquée à la régulation thermique pour atteindre la nouvelle consigne demandée si certaines conditions particulières, détaillées ci-après, sont respectées.

Au contraire, s'il n'existe aucune valeur de variable d'intégration %I enregistrée dans la table de correspondance en association avec la nouvelle consigne (réponse « non » à l'issue de la sous-étape E201), ou si la valeur de la variable d'intégration %I est obsolète (réponse « oui » à l'issue de la sous-étape E202), le dispositif de régulation 600 cherche dans la table de correspondance, dans une sous-étape E203, une valeur de variable d'intégration %I enregistrée en association avec une consigne dont la température est supérieure à la température de la nouvelle consigne (ci-après consigne dite « supérieure ») et une valeur de variable d'intégration %I enregistrée en association avec une consigne dont la température est inférieure à la température de la nouvelle consigne (ci-après consigne dite « inférieure »), et vérifie si aucune de ces valeurs de variables d'intégration (%I) n'est obsolète.

Lorsqu'il existe (réponse « oui » à l'issue de la sous-étape E203) une valeur de variable d'intégration %I enregistrée en association avec une consigne supérieure, respectivement avec une consigne inférieure, et qu'en outre ces deux valeurs sont à jour, le dispositif de régulation 600 détermine (sous-étape E204), par interpolation, la valeur de la variable d'intégration %I associée à la nouvelle consigne pour trouver une approximation de cette dernière. Pour cela, le dispositif de régulation 600 évalue la valeur de la variable d'intégration %I de la nouvelle consigne en se basant sur les deux autres valeurs de variables d'intégration (%I). Cette estimation est, par exemple, réalisée à l'aide d'une méthode mathématique qui prend en compte les valeurs existantes et leurs positions relatives, par exemple en fonction d'une variable telle que le temps. Par exemple, il peut s'agir d'une interpolation linéaire ou polynomiale.

Puis, au cours de la sous-étape E204, le dispositif de régulation 600 met à jour la table de correspondance en enregistrant, dans la table, la valeur estimée de la variable d'intégration %I en l'associant à la nouvelle consigne et à un horodatage indiquant le moment de l'enregistrement dans la table de correspondance.

Au contraire (réponse « non » à l'issue de la sous-étape E203), lorsqu'aucune valeur de variable d'intégration %I n'est enregistrée dans la table de correspondance en association avec une consigne supérieure et, respectivement, avec une consigne inférieure, ou si l'une et/ou l'autre de ces valeurs sont obsolètes, le dispositif de régulation 600 cherche dans la table de correspondance, au cours d'une sous-étape E205, si une valeur de variable d'intégration %I est enregistrée en association avec une consigne supérieure uniquement, et vérifie si cette valeur n'est pas obsolète. Si c'est le cas, (réponse « oui » à l'issue de la sous-étape E205), le dispositif de régulation 600 détermine (sous-étape E206) la valeur de la variable d'intégration %I de la nouvelle consigne comme étant la valeur de la variable d'intégration %I associée à cette consigne supérieure et met à jour la table de correspondance en enregistrant cette valeur de la variable d'intégration %I associée à cette consigne supérieure, en l'associant à la nouvelle consigne et à un horodatage indiquant le moment de l'enregistrement.

Si toutefois aucune valeur de variable d'intégration %I n'est enregistrée en association avec une consigne supérieure (réponse « non » à l'issue de la sous-étape E205), le dispositif de régulation 600 cherche dans la table de correspondance, au cours d'une sous-étape E207, si une valeur de variable d'intégration %I est enregistrée en association avec une consigne inférieure uniquement, et vérifie si cette valeur n'est pas obsolète. Si c'est le cas, (réponse « oui » à l'issue de la sous-étape E207), le dispositif de régulation 600 détermine (sous-étape E208) la valeur de la variable d'intégration %I de la nouvelle consigne comme étant la valeur de la variable d'intégration %I associée à cette consigne inférieure et met à jour la table de correspondance en enregistrant dans la table de correspondance cette valeur de variable d'intégration %I associée à cette consigne inférieure, en l'associant à la nouvelle consigne et à un horodatage indiquant le moment de l'enregistrement.

Selon un mode de réalisation, le dispositif de régulation 600 parcourt la table de correspondance pour rechercher des valeurs de variables d'intégration %I, simultanément ou successivement, pour une consigne supérieure et/ou inférieure en parcourant les consignes adjacentes ou voisines de la nouvelle consigne (e.g., définies par un pas de 0.5°C) jusqu'à identifier au moins une valeur de variable d'intégration %I considérée comme valide. Il est ainsi possible de garantir un fonctionnement robuste et continu de la régulation, même en l'absence d'un apprentissage spécifique pour certaines consignes de température.

La valeur de variable d'intégration %I enregistrée en association avec la nouvelle consigne à l'issue de l'une des sous-étapes E204, E206 et E208 est ensuite appliquée à la régulation thermique pour atteindre la nouvelle consigne, si certaines conditions particulières, détaillées ci-après, sont respectées.

Selon un mode particulier de réalisation, lorsqu'il n'existe aucune valeur de variable d'intégration %I enregistrée en association avec la nouvelle consigne, la consigne supérieure, et la consigne inférieure (e.g., cas où la table est vide), ou que toutes les valeurs de variables d'intégration (%I) pour la nouvelle consigne, la consigne supérieure et la consigne inférieure sont obsolètes, le dispositif de régulation 600 attribue, au cours d'une sous-étape E209, une valeur prédéterminée par défaut (ci-après première valeur prédéterminée par défaut) à la variable d'intégration (%I) associée à la nouvelle consigne , par exemple 0% (Ivalue = 0%).

En mettant à jour une valeur de variable d'intégration %I pour une consigne particulière dans une table de correspondance associant valeur de variable d'intégration %I, consigne et horodatage, il est possible de garantir une régulation thermique adaptée à des modifications des conditions environnementales (e.g., changement de saisons).

Selon un mode de réalisation particulier, chaque valeur de la variable d'intégration (%I) de chaque consigne est associée en outre à un ou plusieurs paramètres contextuels, tel que la température extérieure. Ceci est particulièrement avantageux pour adapter la régulation aux changements de saisons qui entraînent notamment des modifications des températures extérieures. Une telle approche permet d'optimiser encore davantage la performance de la régulation, au prix toutefois d'un besoin accru en capacité de stockage et en accès à des données supplémentaires. Par exemple, l'utilisation de la température extérieure nécessite un capteur dédié ou un accès à des données météorologiques en ligne.

Au cours d'une étape E103, le dispositif de régulation 600 compare la température ambiante de la pièce du bâtiment au moment du traitement de la demande de changement de consigne à la température de la nouvelle consigne demandée, et initialise, ou configure, des paramètres de configuration de la régulation en fonction de cette comparaison.

Les paramètres de configuration de la régulation configurés par le dispositif de régulation 600 sont les suivants :
- paramètre de blocage de la valeur de la variable d'intégration %I en montée (i.e., demande d'augmentation de la température visée par la régulation), noté T°_m_auto, correspondant à une autorisation (T°_m_auto = 1) ou une interdiction (T°_m_auto = 0) de bloquer la valeur de la variable d'intégration %I pendant la régulation, pour une demande d'augmentation de la température visée ;
- paramètre de blocage de la valeur de la variable d'intégration %I en descente (i.e., diminution de la température visée), noté T°_d_auto, correspondant à une autorisation (T°_d_auto = 1) ou à une interdiction (T°_d_auto = 0) de bloquer la valeur de la variable d'intégration %I à 0% pendant la régulation, pour une demande de diminution de la température visée ;
- paramètre de déblocage de la valeur de la variable d'intégration %I en montée, noté dblc_I_m_auto, correspondant à une autorisation (dblc_I_m_auto = 1) ou une interdiction (dblc_I_m_auto = 0) de débloquer la valeur de la variable d'intégration %I pendant la régulation, sur une demande d'augmentation de la température visée. Ce paramètre est particulièrement utile pour autoriser le calcul d'une moyenne glissante de la valeur de la variable d'intégration %I comme par exemple décrit ci-dessus en lien avec la sous-étape E215 ;
- paramètre de déblocage de la valeur de la variable d'intégration %I en descente, noté dblc_I_d_auto, correspondant à une autorisation (dblc_I_d_auto = 1) ou une interdiction (dblc_I_d_auto = 0) de débloquer la valeur de la variable d'intégration %I pendant la régulation, sur une demande de diminution de la température visée ;
- paramètre d'état de la vanne thermostatique, noté s_v, indiquant que la vanne est en mode ouvert (s_v = 1) ou en mode fermé (s_v = 0). La vanne est dite « en mode ouvert » ou « ouverte » lorsqu'elle est en régulation avec un débit de fluide non nul, c'est-à-dire lorsque la tête thermostatique de la vanne doit effectuer une régulation de la température de l'installation de chauffage. La vanne est dite « en mode fermé » ou « fermée » lorsqu'elle ne régule pas et que le débit de fluide est nul ;
- paramètre de temps écoulé depuis que la vanne est dans un mode ouvert (i.e. depuis qu'elle est en régulation), noté tps_ouv, indiquant à quel moment la tête thermostatique de la vanne effectue une régulation de la température de l'installation de chauffage (s_v = 1).

Il est à noter que le « blocage » de la valeur de la variable d'intégration %I dans la régulation consiste à autoriser d'imposer une valeur spécifique de la variable d'intégration %I pendant la régulation PID, empêchant ainsi toute modification de cette valeur pendant une période prédéterminée de la régulation ou jusqu'à ce que certaines conditions soient remplies. A *contrario,* le « déblocage » de la valeur de la variable d'intégration %I pendant la régulation PID consiste à libérer la variable d'intégration %I de toute contrainte imposée, permettant ainsi à la régulation de se poursuivre et de recalculer et d'ajuster cette variable d'intégration %I.

Selon un mode de réalisation, à l'initialisation de la tête thermostatique, les paramètres de configuration de la régulation sont définis tels que : T°_m_auto = 0 ; T°_d_auto = 0 ; dblc_I_m_auto = 1 ; dblc_I_d_auto = 1 ; s_v = 0.

Selon un mode de réalisation, le dispositif de régulation 600 configure ou initialise en outre les paramètres suivants, selon certaines conditions particulières :
- un paramètre noté F_I_auto indiquant qu'une demande d'augmentation de la température visée a été déjà demandée auparavant et que la consigne demandée a été atteinte (F_I_auto = 1) après mise en œuvre d'une régulation thermique vers cette consigne (i.e., lorsque la régulation thermique a stabilisé une température ambiante à la consigne demandée). En particulier, le dispositif de régulation 600 définit le paramètre F_I_auto à 0 lorsqu'aucune demande d'augmentation de la température visée n'a pas déjà été demandé auparavant ou lorsque la consigne demandée, pour une demande d'augmentation de la température visée, n'a pas été atteinte. Le dispositif de régulation 600 définit le paramètre F_I_auto à 1 lorsqu'une première demande d'augmentation de la température visée est demandée et que la consigne demandée est atteinte. Autrement dit, le paramètre noté F_I_auto est mis à 1 lorsqu'une demande d'augmentation de température visée est demandée et que cette température visée (i.e., consigne) est atteinte. Peu importe, cette valeur de température visée. Une fois la température visée atteinte, F_I_auto passe à 1 et n'est plus jamais remis à 0, sauf sur redémarrage de la vanne thermostatique. Il est à noter que lorsque F_I_auto = 0, aucun forçage de la valeur de la variable d'intégration n'est possible ;
- un paramètre noté T_R_I servant à forcer (T_R_I = 1) l'application d'une valeur particulière à la variable d'intégration %I pendant la régulation lorsque des conditions détaillées ci-après sont remplies, ou arrêter (T_R_I = 0) de forcer la valeur donnée à la variable d'intégration %I. Le paramètre T_R_I permet donc de mettre en œuvre, ou non, pendant la régulation PID le « blocage » de la valeur de la variable d'intégration %I pendant la régulation thermique.

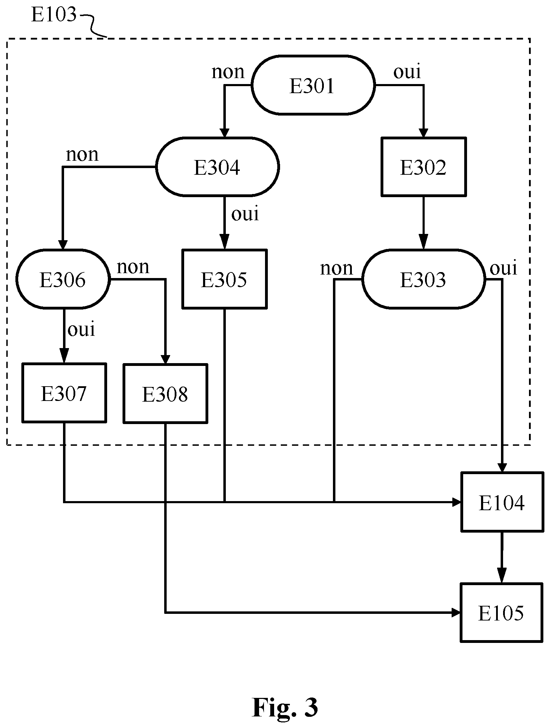

La Fig. 3 illustre schématiquement les sous-étapes d'une étape d'initialisation (étape E103) des paramètres de configuration de la régulation, selon un mode de réalisation.

Au cours d'une sous-étape E301, le dispositif de régulation 600 détermine si une différence entre la température de la nouvelle consigne et la température ambiante au moment du traitement de la demande de changement de consigne est supérieure ou égale à une température seuil prédéterminée, par exemple 1°C (quel que soit l'état de la vanne) ou si la différence entre la température de la nouvelle consigne et la température ambiante au moment du traitement de la demande de changement de consigne est inférieure à cette température seuil prédéterminée, par exemple 1°C avec la vanne en mode fermé (s_v = 0). Autrement dit, la demande de changement de consigne correspond à une demande d'augmentation de la température visée par la régulation.

Si la réponse est « oui » à l'issue de la sous-étape E301, alors le dispositif de régulation 600 exécute une sous-étape E302, une sous-étape E304 (réponse « non » à l'issue de la sous-étape E301) sinon.

Au cours de la sous-étape E302, le dispositif de régulation 600 définit le paramètre de blocage de la valeur de la variable d'intégration %I en montée à 1 (T°_m_auto = 1) et autorise ainsi le blocage de la valeur de la variable d'intégration %I. En outre, le dispositif de régulation 600 définit le paramètre de déblocage de la valeur de la variable d'intégration %I en montée à 0, et interdit ainsi le déblocage de la valeur de la variable d'intégration %I en montée pendant la régulation (dblc_I_m_auto = 0).

Par ailleurs, si la vanne est en mode fermé (s_v = 0) au moment de la réception de la demande de changement de consigne, le dispositif de régulation 600 commande l'ouverture de la vanne pour passer en mode ouvert (s_v = 1) et il enregistre un moment d'ouverture tps_ouv (e.g., date et heure d'ouverture de la vanne).

Par ailleurs, le dispositif de régulation 600 définit les paramètres de blocage et de déblocage de la valeur de la variable d'intégration %I en descente à 0 (T°_d_auto = 0 et dblc_I_d_auto = 0) et interdit ainsi le blocage et le déblocage de la valeur de la variable d'intégration %I en descente pendant la régulation. Il est ainsi possible de s'assurer que ce qui est autorisé par le dispositif de régulation 600 ne concerne que la demande d'augmentation de la température.

Ensuite, au cours d'une sous-étape E303, le dispositif de régulation 600 vérifie si le paramètre F_I_auto est à 1, c'est-à-dire que le dispositif de régulation 600 a déjà régulé sur une demande d'augmentation de la température visée.

Si c'est le cas (réponse « oui » à l'issue de la sous-étape E303 ; F_I_auto = 1), le dispositif de régulation 600 initialise la paramètre T_R_I à 1 et force la variable d'intégration %I à la valeur (%I_consigne) préalablement obtenue à partir de la table de correspondance (Ivalue=%I_consigne) à l'issue de l'une des sous-étapes E202, E204, E206 et E208, pendant la régulation ou à la première valeur prédéterminée obtenue à l'issue de la sous-étape E209 (e.g., Ivalue = 0%). En effet, il est à noter que lorsque F_I_auto = 1, mais que les valeurs de la table de correspondance sont obsolètes, la valeur de la variable d'intégration %I correspond à la première valeur prédéterminée par défaut attribuée au cours de la sous-étape E209.

Le dispositif de régulation 600 ayant autorisé le blocage de la variable d'intégration %I à la valeur obtenue à partir de la table de correspondance (%I_consigne), ou à la première valeur prédéterminée par défaut (e.g., 0%), et interdit le déblocage de celle-ci pendant la régulation, il est possible d'appliquer cette dernière à l'initialisation de la régulation, au cours d'une étape E104, jusqu'à ce qu'une période prédéterminée de la régulation soit écoulée ou jusqu'à ce que la nouvelle consigne soit atteinte.

Au contraire (réponse « non » à l'issue de la sous-étape E303 ; F_I_auto = 0), le dispositif de régulation 600 initialise le paramètre T_R_I à 0 et ne force aucune valeur de la variable d'intégration. La variable d'intégration est alors déterminée et ajustée de manière connue de l'état de l'art au cours de la régulation PID.

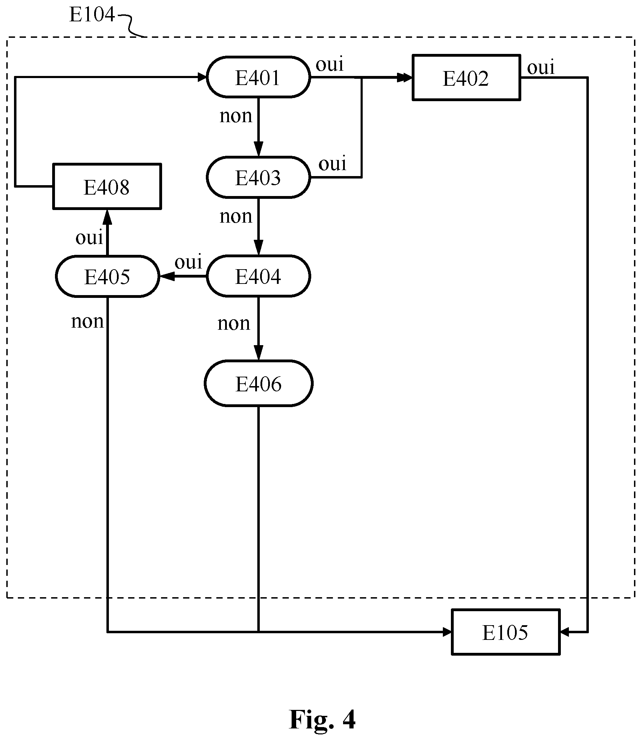

Selon un mode de réalisation de l'étape E104 dont un exemple est illustré en **Fig. 4****,** le dispositif de régulation 600 initialise la régulation thermique en affectant la valeur de la variable d'intégration %I à la valeur applicable à la régulation obtenue à l'issue de la sous-étape E303 (F_I_auto = 1 et T_R_I = 1). Cette valeur de la variable d'intégration %I est alors appliquée à l'initialisation de la régulation thermique et ceux-ci pendant une période prédéterminée (e.g., 1h30) ou jusqu'à ce que la nouvelle consigne soit atteinte. Ensuite, au cours d'une étape E105, la régulation thermique est poursuivie en ajustant la valeur de la variable d'intégration %I avec comme valeur initiale la valeur applicable obtenue à l'issue de la sous-étape E303.

La **Fig. 4** illustre schématiquement les sous-étapes d'une étape d'initialisation de la régulation thermique (E104) du procédé de régulation thermique, selon le mode de réalisation décrit ci-dessus.

Selon ce mode de réalisation, le dispositif de régulation 600 a préalablement déterminé, au cours de la sous-étape E301, que la demande de changement de consigne correspond à une demande d' augmentation de la température visée. En conséquence, le dispositif de régulation 600 autorise le blocage de la valeur de la variable d'intégration %I à une valeur correspondant à une valeur qui a été préalablement enregistrée dans la table ou une première valeur prédéterminée par défaut (F_I_auto = 1 ; T_R_I = 1 ; Ivalue = %I_consigne ou Ivalue = 0%) (réponse « oui » à l'issue de la sous-étape E303).

Ainsi, au cours d'une sous-étape E401, le dispositif de régulation 600 vérifie si le changement de consigne a été effectué au-delà d'une période prédéterminée de la régulation, par exemple il y a plus 1h30. Si c'est le cas (réponse « oui » à l'issue de la sous-étape E401), le dispositif de régulation 600 définit le paramètre T_R_I à 0 au cours d'une sous-étape E402, pour arrêter de forcer l'application de la valeur de la variable d'intégration %I pendant la régulation et autorise le déblocage de la valeur de la variable d'intégration %I en montée (dblc_I_m_auto = 1) pour libérer la variable d'intégration %I. Le dispositif de régulation 600 poursuit la régulation thermique en ajustant la valeur de la variable d'intégration %I avec comme valeur initiale soit la valeur obtenue à partir de la table de correspondance (Ivalue = %I_consigne), soit la première valeur prédéterminée par défaut (Ivalue = 0%), pendant la régulation.

Si la période prédéterminée de la régulation n'est pas écoulée (réponse « non » à l'issue de la sous-étape E401), le dispositif de régulation 600 vérifie, au cours d'une sous-étape E403, si la température ambiante à un instant t donné est supérieure à la température de la nouvelle consigne. En effet, si la température ambiante à un instant t donné est supérieure à la température de la nouvelle consigne, cela signifie que la température de la nouvelle consigne a été atteinte au cours de la régulation. Si la réponse est « oui » à l'issue de la sous-étape E403, le dispositif de régulation 600 exécute la sous-étape E402, puis l'étape E105. Le calcul de la valeur de la variable d'intégration %I est poursuivi et la valeur ajustée avec comme valeur initiale soit la valeur obtenue à partir de la table de correspondance (Ivalue = %I_consigne), soit la première valeur prédéterminée par défaut (e.g., Ivalue = 0%).

Sinon (réponse « non » à l'issue de la sous-étape E403), le dispositif de régulation 600 vérifie, au cours d'une sous-étape E404, si le paramètre T_R_I est à 0 ou à 1.

Si T_R_I = 0 (réponse « oui » à l'issue de la sous-étape E404), le dispositif de régulation 600 vérifie si le paramètre F_I_auto est à 1, au cours d'une sous-étape E405.

Lorsque la réponse est « oui » à l'issue de la sous-étape E405 (T_R_I = 0 et F_I_auto = 1), le dispositif de régulation 600 configure le paramètre T_R_I à 1 au cours de la sous-étape E408 pour forcer l'application de la valeur obtenue à partir de la table (Ivalue = I%_consigne) ou de la première valeur prédéterminée par défaut (e.g., Ivalue = 0%) à la variable d'intégration %I. Le dispositif de régulation 600 reprend ensuite à la sous-étape E401 jusqu'à ce que la période prédéterminée de la régulation soit écoulée ou jusqu'à ce que la température ambiante atteigne la température de la nouvelle consigne.

Lorsque la réponse est « non » à l'issue de la sous-étape E405 (T_R_I = 0 et F_I_auto = 0) le dispositif de régulation 600 ne force aucune valeur de la variable d'intégration et la régulation (étape 105) est poursuivie en calculant et ajustant la variable d'intégration de manière connue de l'état de l'art.

Si T_R_I = 1 (réponse « non » à l'issue de la sous-étape E404), le dispositif de régulation 600 configure le paramètre T_R_I à 0 au cours de la sous-étape E406.

Puis, au cours de la sous-étape E406, le dispositif de régulation 600 vérifie si le paramètre F_I_auto est à 1 ou 0. Lorsque F_I_auto = 1, le dispositif de régulation 600 poursuit la régulation (étape E105), sans forcer de valeur (T_R_I = 0) et reprend le calcul de la valeur de la variable d'intégration %I avec comme valeur initiale soit la valeur obtenue à partir de la table de correspondance (Ivalue = %I_consigne), soit la première valeur prédéterminée par défaut (e.g., Ivalue = 0%).

Au contraire, lorsque F_I_auto = 0, le dispositif de régulation 600 poursuit la régulation (étape E105), sans forcer de valeur (T_R_I = 0) et en calculant la variable d'intégration %I de manière connue de l'état de l'art.

Au cours de la sous-étape E304, le dispositif de régulation 600 détermine si la différence entre la température ambiante au moment du traitement de la demande de changement de consigne et la température de la nouvelle consigne est supérieure ou égale à une température seuil prédéterminée, par exemple 1°C (i.e., demande de diminution de la température visée). Si c'est bien le cas (réponse « oui » à l'issue de la sous-étape E304), le dispositif de régulation 600 exécute la sous-étape E305, la sous-étape E306 (réponse « non » à l'issue de la sous-étape E304) sinon.

Au cours de la sous-étape E305, le dispositif de régulation 600 définit le paramètre de blocage de la valeur de la variable d'intégration %I en descente à 1 (T°_d_auto = 1) et autorise ainsi le blocage de la variable d'intégration %I en descente pendant la régulation. En outre, le dispositif de régulation 600 définit le paramètre de déblocage de la valeur de la variable d'intégration %I en descente à 0 (dblc_I_d_auto = 0) et interdit ainsi le déblocage de la valeur de la variable d'intégration %I en descente pendant la régulation.

Par ailleurs, le dispositif de régulation 600 interdit le blocage de la valeur de la variable d'intégration %I en montée (T°_m_auto = 0) et autorise le déblocage de la valeur de la variable d'intégration %I en montée (dblc_I_m_auto = 1) pendant la régulation. Ainsi, le dispositif de régulation 600 peut calculer la valeur de la variable d'intégration %I pour cette nouvelle consigne lorsqu'une phase stabilisée de la régulation est atteinte et que la température cible de la nouvelle consigne est atteinte.

Le dispositif de régulation 600 commande, en outre, la fermeture de la vanne si cette dernière est en mode ouvert (s_v = 1) et définit le paramètre « état de la vanne » (s_v) à 0.

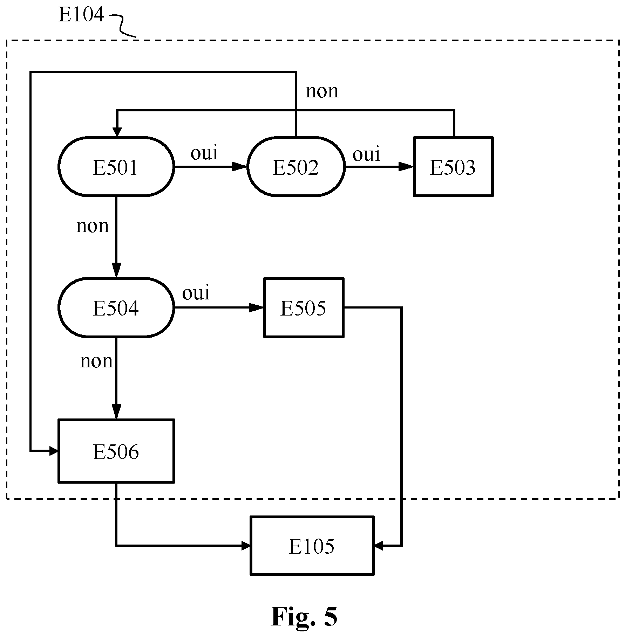

En outre, le dispositif de régulation 600 définit le paramètre T_R_I à 1. En effet, dans ce cas la température ambiante est suffisamment éloignée de la température de la nouvelle consigne pour forcer la valeur de la variable d'intégration %I à une valeur prédéterminée par défaut (ci-après deuxième valeur prédéterminée par défaut), par exemple 0%, jusqu'à ce qu'une ou plusieurs conditions soient remplies, comme décrit ci-après en lien avec la Fig. 5. Il est à noter qu'une autre deuxième valeur prédéterminée pourrait être appliquée, par exemple une valeur supérieure à 0% et qui permettrait de maintenir le débit de fluide à zéro. Cela permettrait de limiter les mouvements du moteur et par conséquent augmenter la durée de vie des piles.

Ainsi, selon un autre mode de réalisation de l'étape E104, dont un exemple est illustré en Fig. 5, le dispositif de régulation 600 initialise une régulation thermique en bloquant la variable d'intégration %I à la deuxième valeur prédéterminée par défaut, par exemple 0%, jusqu'à ce que des conditions décrites ci-après soit remplies. Ensuite, au cours d'une étape E105, la régulation est poursuivie en ajustant la valeur de la variable d'intégration %I avec cette deuxième valeur prédéterminée par défaut comme valeur initiale.

Au cours de la sous-étape E306, le dispositif de régulation 600 détermine si la différence entre la température ambiante au moment du traitement de la demande de changement de consigne et la température de la nouvelle consigne est inférieure à la température seuil prédéterminée, par exemple à 1°C et vérifie en outre si la vanne est en mode fermé (s_v = 0). Si c'est le cas (réponse « oui » à l'issue de la sous-étape E306), le dispositif de régulation 600 exécute une sous-étape E307, une sous-étape E308 (réponse « non » à l'issue de la sous-étape E306) sinon.

Au cours de la sous-étape E307, le dispositif de régulation 600 autorise le blocage de la valeur de la variable d'intégration %I en descente (T°_d_auto = 1) et interdit le déblocage de la valeur de la variable d'intégration %I en descente (dblc_I_d_auto = 0) pendant la régulation.

En outre, le dispositif de régulation 600 interdit le blocage de la valeur de la variable d'intégration %I en montée (T°_m_auto = 0) et autorise le déblocage de la valeur de la variable d'intégration %I en montée (dblc_I_m_auto = 1) pendant la régulation. Ainsi, le dispositif de régulation 600 peut calculer la valeur de la variable d'intégration %I pour cette nouvelle consigne lorsqu'une phase stabilisée de la régulation est atteinte et que la température cible de la nouvelle consigne est atteinte.

Par ailleurs, le dispositif de régulation définit le paramètre T_R_I à 0. Dans ce cas il n'y a pas besoin de forcer la valeur de la variable d'intégration %I à la deuxième valeur prédéterminée par défaut, par exemple 0%, car la température ambiante est suffisamment proche de la température de la nouvelle consigne.

La **Fig. 5** illustre schématiquement les sous-étapes d'une étape d'initialisation de la régulation thermique (E104) du procédé de régulation thermique, selon cet autre mode de réalisation.

Le dispositif de régulation 600 a préalablement autorisé le blocage de la valeur de la variable d'intégration %I en descente (T°_d_auto = 1) pendant la régulation. En conséquent, pendant la régulation thermique vers la nouvelle consigne, la variable d'intégration %I peut être bloquée à la deuxième valeur prédéterminée par défaut, par exemple 0%. Cette valeur peut être soit appliquée à l'initialisation de la régulation (cas où T_R_I = 1), soit aucune valeur particulière n'est appliquée (T_R_I = 0), même si le blocage de celle-ci est autorisé.

Au cours d'une sous-étape E501, le dispositif de régulation 600 compare la température ambiante à un instant t donné à la température de la nouvelle consigne additionnée d'un seuil prédéterminé de température (e.g., 0.5°C).

Lorsque la température ambiante à un instant t donné est supérieure à la température cible de la nouvelle consigne additionnée du seuil prédéterminé de température (e.g., 0.5°C) (réponse « oui » à l'issue de la sous-étape E501), le dispositif de régulation 600 vérifie, au cours de la sous-étape E502, si le déblocage de la valeur de la variable d'intégration %I en descente est autorisé (dblc_I_d_auto = 1) ou interdit (dblc_I_d_auto = 0) pendant la régulation.

Si le déblocage de la valeur de la variable d'intégration %I est interdit (dblc_I_d_auto = 0 ; réponse « oui » à l'issue de l'étape E502), le dispositif de régulation 600 définit le paramètre T_R_I à 1 (sous-étape E503) s'il ne l'est pas déjà, pour forcer l'application de la deuxième valeur prédéterminée par défaut telle que 0% (Ivalue = 0%) à la variable d'intégration %I. La deuxième valeur prédéterminée par défaut est alors affectée à la variable d'intégration %I, par exemple, jusqu'à ce que la température ambiante à un instant t donné soit égale ou inférieure à la température de la nouvelle consigne additionnée du seuil prédéterminé de température (e.g., 0.5°C). Le dispositif de régulation 600 commande également la fermeture de la vanne (s_v=0) si cette dernière est on mode ouvert.

Au contraire (dblc_I_d_auto = 1 ; réponse « non » à l'issue de l'étape E502), le dispositif de régulation 600 passe à une sous-étape E506. Le paramètre dblc_I_d_auto = 1 par exemple lorsque la température ambiante à un instant t donné est supérieure à la température cible de la nouvelle consigne additionnée du seuil prédéterminé de température (e.g., 0.5°C) et qu'une sous-étape E505 a été effectué. Ainsi, si la température ambiante repasse au-dessus de la température de la consigne additionnée du seuil prédéterminé de température (e.g., 0.5°C) (par exemple à cause des oscillations de température pendant la régulation) d'éviter de forcer l'application de la deuxième valeur prédéterminée par défaut. La régulation se fait alors en calculant la variable d'intégration %I de manière connue de l'état de l'art.

Lorsque la température ambiante à un instant t donné est égale ou inférieure à la température de la nouvelle consigne additionnée du seuil prédéterminé de température (e.g., 0.5°C) (réponse « non » à l'issue de la sous-étape E501), le dispositif de régulation 600 vérifie, comme pour la sous-étape E502, si le déblocage de la valeur de variable d'intégration %I en descente est autorisé (dblc_I_d_auto = 1) ou interdit (dblc_I_d_auto = 0) (sous-étape E504). Si le déblocage de la valeur de variable d'intégration %I en descente est interdit (dblc_I_d_auto = 0 ; réponse « oui » à l'issue de la sous-étape E504), le dispositif de régulation 600 (sous-étape E505) autorise le déblocage de la valeur de la variable d'intégration %I en descente (dblc_I_d_auto = 1) pour que la régulation se poursuive en partant d'une valeur initiale de la variable d'intégration %I correspondant à la valeur obtenue à partir de la table de correspondance (Ivalue = %I_consigne) ou à la première valeur prédéterminée par défaut (Ivalue = 0% par exemple). Pour cela, le dispositif de régulation définit le paramètre T_R_I à 1, pour forcer l'application d'une valeur initiale correspondant à la valeur obtenue à partir de la table de correspondance (Ivalue = %I_consigne) ou à la première valeur prédéterminée par défaut (Ivalue = 0% par exemple, cas où les valeurs dans la table sont obsolètes par exemple). Le dispositif de régulation 600 commande l'ouverture de la vanne (s_v = 1) pour que la régulation thermique puisse se poursuivre à partir d'une valeur initiale de la variable d'intégration %I égale à la valeur obtenue à partir de la table de correspondance ou à la première valeur prédéterminée par défaut (Ivalue = 0% par exemple, cas où les valeurs dans la table sont obsolètes par exemple). Le dispositif de régulation 600 enregistre en outre un moment d'ouverture de la vanne tps_ouv.

Sinon (dblc_I_d_auto = 1 ; réponse « non » à l'issue de la sous-étape E504 ou E502), le dispositif de régulation 600 définit le paramètre T_R_I à 0 au cours d'une sous-étape E506, et poursuit la régulation thermique (étape E105) sans forcer aucune valeur de la variable d'intégration %I et en calculant la valeur de la variable d'intégration %I de manière connue de l'état de l'art.

En revanche, si la réponse est « non » à l'issue de la sous-étape E306, et que lors d'un changement de consigne, la différence entre la température de la nouvelle consigne et la température ambiante au moment du traitement de la demande de changement de consigne est inférieure à 1°C, que ce soit pour une demande d'augmentation de la température visée alors que la vanne est en mode ouvert (s_v = 1) ou pour une demande de diminution de la température visée alors que la vanne est en mode ouvert, alors le blocage de la valeur de la variable d'intégration %I est interdit. Dans ce cas, au cours d'une sous-étape E308, le dispositif de régulation 600 définit les paramètres de blocage de la valeur de la variable d'intégration %I en montée et en descente (T°_m_auto et T°_d_auto) à 0, et les paramètres de déblocage de la valeur de la variable d'intégration %I en montée (dblc_I_m_auto) et en descente (dblc_I_d_auto), respectivement à 1 et à 0. En outre, le dispositif de régulation 600 définit le paramètre T_R_I à 0. La régulation « classique » est alors mise en œuvre au cours de l'étape E105.

La Fig. 6 illustre schématiquement un exemple de plateforme matérielle permettant d'implémenter, sous forme de circuiterie électronique, le dispositif de régulation selon un mode de réalisation

La plateforme matérielle comporte, reliés par un bus de communication 610 : un processeur ou CPU (« *Central Processing Unit »* en anglais) 601 ; une mémoire vive RAM (*« Random-Access Memory »* en anglais) 602 ; une mémoire morte 603, par exemple de type ROM (*« Read Only Memory »* en anglais) ou EEPROM (*« Electrically-Erasable Programmable ROM »* en anglais), telle qu'une mémoire Flash ; une unité de stockage, telle qu'un disque dur HDD (*« Hard Disk Drive »* en anglais) 604, ou un lecteur de support de stockage, tel qu'un lecteur de cartes SD (*« Secure Digital »* en anglais) ; et un gestionnaire d'interfaces I/f 605.

Le gestionnaire d'interfaces I/f 605 permet au dispositif de régulation 600 d'interagir avec des capteurs de température intérieure (e.g., sonde thermique) et, le cas échéant, avec des capteurs de température extérieure, mais également avec le moteur de la tête thermostatique de vanne pour commander l'ouverture ou la fermeture de la vanne, et des systèmes de contrôle de température (thermostat connecté, système de domotique, ou système de réglage de la température intégré à la vanne thermostatique, etc.)

Le processeur 601 est capable d'exécuter des instructions qui forment un programme d'ordinateur (produit programme d'ordinateur) et qui sont chargées dans la mémoire vive 602 à partir de la mémoire morte 603, d'une mémoire externe, d'un support de stockage (tel qu'une carte SD), ou d'un réseau de communication. Lorsque la plateforme matérielle est mise sous tension, le processeur 601 est capable de lire de la mémoire vive 602 les instructions précitées et de les exécuter. Quand elles sont lues (depuis la mémoire vive 602 ou un support de stockage) et exécutées par le processeur 601, ces instructions (qui forment un programme d'ordinateur) entraînent l'exécution, par le processeur 601, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« *Digital Signal Processor »* en anglais) ou un microcontrôleur, ou être implémenté sous forme matérielle par une machine ou un composant électronique (« *chip* » en anglais) dédié ou un ensemble de composants électroniques (« *chipset* » en anglais) dédié, par exemple un composant FPGA (« *Field Programmable Gate Array* » en anglais) ou ASIC (« *Application Specific Integrated Circuit* » en anglais). D'une manière générale, le dispositif de régulation 600 comporte de la circuiterie électronique adaptée et configurée pour implémenter les fonctionnements, procédés et étapes décrits ici.

## Revendications

1. Procédé de régulation proportionnelle, intégrale, dérivée, dite régulation PID, de la température d'une pièce d'un bâtiment, ladite pièce étant chauffée au moyen d'un fluide caloporteur circulant dans une installation de chauffage comprenant une vanne thermostatique comportant une tête thermostatique, ledit procédé étant **caractérisé en ce qu'**il est implémenté dans un dispositif de régulation (600) de la tête thermostatique **et en ce qu'**il utilise une table de correspondance comprenant une pluralité de consignes de température chacune étant possiblement associée à une valeur d'une variable d'intégration (%I) de la régulation PID, **et en ce qu'**il comprend :
- sur réception (E101) d'une consigne de température à atteindre et maintenir, obtenir (E102) une valeur d'une variable d'intégration (%I) associée à ladite consigne à partir de la table de correspondance ou, à défaut, attribuer une valeur prédéterminée par défaut à ladite variable d'intégration (%I) associée à ladite consigne,
- initier (E104) ladite régulation PID en affectant à la variable d'intégration (%I) associée à la consigne soit la valeur obtenue à partir de la table de correspondance, soit la valeur prédéterminée par défaut, et en maintenant ladite valeur de variable d'intégration constante pendant une période prédéterminée ou jusqu'à ce qu'une condition de température soit remplie, puis,
- poursuivre (E105) la régulation PID en ajustant la valeur de la variable d'intégration (%I) associée à la consigne, la valeur obtenue ou la valeur prédéterminée par défaut attribuée étant utilisée comme valeur initiale pour la variable d'intégration (%I) de la consigne.

2. Procédé de régulation selon la revendication 1, **caractérisé en ce qu'**il comprend en outre : mettre à jour (E102) ladite table de correspondance avec une valeur d'une variable d'intégration (%I) de la régulation PID associée à une consigne antérieure.

3. Procédé de régulation selon la revendication 2, **caractérisé en ce que** mettre à jour (E102) ladite table de correspondance avec ladite valeur de variable d'intégration (%I) associée à la consigne antérieure comprend : déterminer (E215) ladite valeur de variable d'intégration (%I) associée à la consigne antérieure à partir d'une moyenne glissante sur une période prédéterminée de ladite régulation PID si la vanne thermostatique est en fonctionnement depuis une période prédéterminée de fonctionnement suivant une installation de la tête thermostatique (E210), et la vanne thermostatique est en mode ouvert (E211), et un temps écoulé depuis que la vanne thermostatique est en mode ouvert est supérieur à une période prédéterminée d'ouverture de la vanne (E212), et la variable d'intégration (%I) associée à la consigne antérieure est ajustée pendant la régulation PID (E213), et une moyenne de la température ambiante est comprise dans un intervalle de température prédéterminé autour de la consigne antérieure (E214).

4. Procédé de régulation selon l'une quelconque des revendications 1 à 3, **caractérisé en ce qu'**obtenir (E102) la valeur de la variable d'intégration (%I) associé à la consigne à partir de ladite table de correspondance comprend :
- vérifier (E201) s'il existe une valeur de la variable d'intégration (%I) associée à la consigne qui a été préalablement enregistrée dans la table de correspondance au cours d'un changement de consigne postérieur vers cette même consigne, et si cette valeur est à jour (E202), et ;
- si aucune valeur de la variable d'intégration (%I) n'est associée à la consigne dans ladite table de correspondance ou si cette valeur est obsolète, déterminer (E204) ladite valeur à partir d'une valeur, à jour, de variable d'intégration (%I) associée à une consigne supérieure dont une température est supérieure à une température de la consigne et une valeur, à jour, de variable d'intégration (%I) associée à une consigne inférieure dont une température est inférieure à la température de la consigne, et enregistrer ladite valeur déterminée dans la table de correspondance en association avec la consigne ;
- sinon, déterminer (E206) ladite valeur associée à la consigne à partir uniquement d'une valeur, à jour, de variable d'intégration (%I) associée à une consigne supérieure dont une température est supérieure à la température de la consigne, et enregistrer ladite valeur déterminée dans la table de correspondance en association avec la consigne ;
- sinon, déterminer (E208) ladite valeur associée à la consigne à partir uniquement d'une valeur, à jour, de variable d'intégration (%I) associée à une consigne inférieure dont une température est inférieure à la température de la consigne, et enregistrer (E208) dans la table de correspondance ladite valeur déterminée en association avec la consigne ;
- sinon, attribuer (E209) ladite valeur prédéterminée par défaut à la variable d'intégration (%I) associée à la consigne.

5. Procédé de régulation selon l'une des revendications 1 à 4, **caractérisé en ce qu'**il comprend en outre :
- déterminer (E301) si une différence entre la température de la consigne et la température ambiante est supérieure ou égale à une température seuil prédéterminée ou si une différence entre la température de la consigne et la température ambiante est inférieure à ladite température seuil prédéterminée et qu'en outre la vanne thermostatique est en mode fermé ;
- sinon, déterminer (E304) si une différence entre la température ambiante et la température de la consigne est supérieure à ladite température seuil prédéterminée ;
- sinon, déterminer (E306) si une différence entre la température ambiante et la température de la consigne est inférieure ou égale à ladite température seuil prédéterminée et qu'en outre la vanne thermostatique est en mode fermé.

6. Procédé de régulation selon la revendication 5, **caractérisé en ce que** ladite une condition de température à remplir est que la température ambiante atteigne la température de la consigne au cours de la régulation PID, lorsque la différence entre la température de la consigne et la température ambiante est supérieure ou égale à ladite température seuil prédéterminée ou lorsque la différence entre la température de la consigne et la température ambiante est inférieure à ladite température seuil prédéterminée et qu'en outre la vanne thermostatique est en mode fermé.

7. Procédé de régulation selon l'une quelconque des revendications 5 et 6, **caractérisé en ce que** ladite une condition de température à remplir est que la température ambiante soit inférieure à la température de la consigne additionnée d'un seuil prédéterminé de température lorsque la différence entre la température ambiante et la température de la consigne est supérieure à ladite température seuil prédéterminée ou lorsque la différence entre la température ambiante et la température de la consigne est inférieure ou égale à ladite température seuil prédéterminée et qu'en outre la vanne thermostatique est en mode fermé.

8. Procédé de régulation selon l'une quelconque des revendications 1 à 7, **caractérisé en ce que** la table de correspondance comprend en outre une pluralité de plages de températures extérieures chacune associée à ladite pluralité de consignes de température chacune étant possiblement associée à une valeur d'une variable d'intégration (%I) de la régulation PID.

9. Dispositif (600) de régulation proportionnelle, intégrale, dérivée, dite régulation PID, de la température d'une pièce d'un bâtiment, ladite pièce étant chauffée au moyen d'un fluide caloporteur circulant dans une installation de chauffage comprenant une vanne thermostatique comportant une tête thermostatique, **caractérisé en ce que** ledit dispositif de régulation (600) est compris dans la tête thermostatique **et en ce qu'**il comprend de la circuiterie électronique configurée pour utiliser une table de correspondance comprenant une pluralité de consignes de température chacune étant possiblement associée à une valeur d'une variable d'intégration (%I) de la régulation PID, **et en ce que** la circuiterie électronique est en outre configurée pour :
- sur réception (E101) d'une consigne de température à atteindre et maintenir, obtenir (E102) une valeur d'une variable d'intégration (%I) associée à ladite consigne à partir de la table de correspondance ou, à défaut, attribuer une valeur prédéterminée par défaut à ladite variable d'intégration (%I) associée à ladite consigne,
- initier (E104) ladite régulation PID en affectant à la variable d'intégration (%I) associée à la consigne soit la valeur obtenue à partir de la table de correspondance, soit la valeur prédéterminée par défaut, et en maintenant ladite valeur de variable d'intégration constante pendant une période prédéterminée ou jusqu'à ce une condition de température soit remplie, puis,
- poursuivre (E105) la régulation PID en ajustant la valeur de la variable d'intégration (%I) associée à la consigne, la valeur obtenue ou la valeur prédéterminée par défaut attribuée étant utilisée comme valeur initiale pour la variable d'intégration (%I) de la consigne.

10. Produit programme d'ordinateur, comportant des instructions entraînant l'exécution, par un processeur (601), du procédé selon la revendication 1 à 8, lorsque lesdites instructions sont exécutées par le processeur.

11. Support de stockage (603), stockant un programme d'ordinateur comportant des instructions entraînant l'exécution, par un processeur (601), du procédé selon la revendication 1 à 8, lorsque lesdites instructions sont lues depuis le support de stockage et exécutées par le processeur.
